# EUROPEAN PATENT SPECIFICATION

(11) **EP 1 637 408 B1**
(45) Date of publication and mention of the grant of the patent: **04.03.2009**
(21) Application number: 05016782.4
(22) Date of filing: 02.08.2005
(51) Int. Cl.: B60R 21/16, B60R 21/20

(54) **Curtain airbag device and vehicle including such a device**
Vorhang-Airbagvorrichtung und Fahrzeug mit einer solchen Vorrichtung
Dispositif de coussin gonflable de type rideau et véhicule comprenant un tel dispositif

(30) Priority: 21.09.2004 JP 2004273613
(43) Date of publication of application: 22.03.2006
(73) Proprietor: TAKATA CORPORATION, Minato-ku, Tokyo 106-8510 (JP)
(72) Inventor: Noguchi, Atsushi, c/o Takata Corporation, Tokyo 106-8510 (JP); Takedomi, Akifumi, c/o Takata Corporation, Tokyo 106-8510 (JP); Kosugi, Noriyuki, c/oTakata Corporation, Tokyo 106-8510 (JP)
(74) Representative: Vossius & Partner

(56) References cited:
- DE-A1- 10 354 199
- US-A- 6 158 767
- US-A1- 2002 180 190
- US-A1- 2003 132 620

## Description

The present invention relates to curtain airbags for protecting heads of vehicle occupants, and in particular, relates to curtain airbags expanding along windows and the like of side doors when vehicles are involved in, for example, a side-on collision or rollover. Furthermore, the present invention relates to vehicles including such curtain airbag devices.

US 6 158 767 relates to a side airbag arrangement according to the preamble of claim 1 for a motor vehicle having a plurality of airbag compartments mounted next to each other above a side window in a region of the roof frame and window pillar of the motor vehicle and stored there in a folded-together fashion in the deactivated state. In the activated state, the airbag compartments extend in front of the side window to provide a cover starting from that region. Each of the airbag compartments can be filled independently of the other by a control unit to achieve an improved protective effect with reduced complexity. For this purpose, each of the airbag compartments is connected by a valve to a gas duct which is mounted in the region of the roof frame and window pillar and can receive gas from two gas generators at opposite ends. The valves are controllable independently of each other.

DE 103 54 199 A1 relates to an airbag apparatus consisting of front bag portion and back bag portion connected by a tether, which are inflated using an inflator based on the impact acting on the back-seat, extending along the front and rear ends of the inflator, respectively.

US 2002/180190 A1 relates to an air bag cushion deployable from a location along the roof rail portion of a vehicle frame in substantially curtain-like fashion across the side of the vehicle interior over an expansive area adjacent to an occupant to be protected. The air bag cushion is of a partially segmented construction including a main body portion deployable downwardly away from the roof rail and an expansible upper portion expansible between the header portion of the roof rail and the head of an adjacently seated vehicle occupant. The main body portion and the inflatable upper portion of the air bag cushion are attachable to the roof rail structure along a common line of attachment. The inflatable upper portion and the main body portion of the air bag cushion may be inflated by a common source of inflation gas so as to utilize a single common inflator.

Airbags for protecting heads of vehicle occupants include curtain airbags disposed around corners of roofs and side faces of vehicles inside the vehicle cabins and being capable of expanding along windows and the like of side doors by gas fed from gas inlets.

When a vehicle including a curtain airbag device is involved in, for example, a side-on collision or rollover, the curtain airbag expands downward of the vehicle body along a side face (for example, doors or pillars) inside the vehicle cabin so as to protect heads of occupants, and at the same time, prevents occupants from being thrown out of the vehicle when windows are open.

In JP-Patent 3125729 (Patent Document 1), a plate referred to as a jump base for guiding the expanding direction of a curtain airbag is provided under the folded curtain airbag such that the expanding curtain airbag is not caught in an upper end of a B pillar garnish.

In the case of JP-Patent 3125729, the shape and the size of the jump base must be changed depending on the size of the vehicle body or the size and the shape of the B pillar garnish, and thus must be designed and produced for each type of vehicle.

Accordingly, the object of the present invention is to provide a common curtain airbag device attachable to vehicles regardless of the sizes of the vehicle bodies or the sizes and the shapes of the center pillar garnishes.

This object is achieved by the features of the claims.

According to the present invention, a curtain airbag device includes a folded curtain airbag disposed along an upper side face of a vehicle facing a cabin and being capable of expanding downward along the side face; an inflator for inflating the curtain airbag; and a guide airbag for displacing the curtain airbag toward the cabin and/or for regulating the expanding direction of the curtain airbag, the guide airbag expanding substantially at the same time as the expansion of the curtain airbag.

In the curtain airbag device according to the present invention, the guide airbag is disposed between the side face of the vehicle and the folded curtain airbag.

In the curtain airbag device according to the present invention, the guide airbag may also be disposed under the folded curtain airbag.

In the curtain airbag device according to the present invention, the guide airbag expands so as to displace the curtain airbag toward the cabin over the upper end of a center pillar garnish facing the cabin.

In the curtain airbag device according to the present invention, the guide airbag is disposed along a side of the folded curtain airbag facing the cabin and/or along the side and the top of the folded curtain airbag.

According to a further aspect, in the curtain airbag device according to the present invention, the guide airbag is disposed between the side face of the vehicle and the folded curtain airbag in the upper area of a center pillar, and is disposed along a side of the folded curtain airbag facing the cabin and/or along the side and the top of the folded curtain airbag in the upper area of a side door or a window.

Furthermore, in the curtain airbag device according to the present invention, the guide airbag is disposed between the side face of the vehicle and the folded curtain airbag and under the folded curtain airbag in the upper area of a center pillar, and is disposed along a side of the folded curtain airbag facing the cabin and/or along the side and the top of the folded curtain airbag in the upper area of a side door or a window.

In the curtain airbag device according to the present invention, the guide airbag expands so as to displace the curtain airbag toward the cabin over the upper end of a center pillar garnish facing the cabin in the upper area of the center pillar.

In the curtain airbag device according to the present invention, the volume of the guide airbag is smaller than that of the curtain airbag.

In the curtain airbag device according to the present invention, the inflator is connected to both the guide airbag and the curtain airbag so as to supply gas to both airbags.

A vehicle according to the present invention includes the curtain airbag device according to the present invention.

According to the curtain airbag and the vehicle of the present invention, the inflator starts operating during a side-on collision or rollover of the vehicle, and the curtain airbag expands along the side face (for example, window openings and a center pillar) inside the vehicle cabin. The guide airbag expands substantially at the same time as the expansion of this curtain airbag so as to regulate the expanding direction of the curtain airbag or to displace the curtain airbag toward the cabin such that the center pillar garnish does not interfere with the curtain airbag. As a result, the curtain airbag expands very smoothly.

When the guide airbag is disposed between the side face of the vehicle and the folded curtain airbag, the curtain airbag moves quickly toward the cabin, and the interference of the center pillar garnish can be prevented. Also, when the guide airbag is disposed under the folded curtain airbag, the curtain airbag is pushed by the guide airbag so as to move toward the cabin, and the interference of the center pillar garnish can be prevented. In these cases, the curtain airbag is displaced toward the cabin over the upper end of the center pillar garnish facing the cabin, and thus the interference of the center pillar garnish with the curtain airbag can be reliably prevented.

The guide airbag may be disposed along the side of the curtain airbag facing the cabin, or along the side and the top of the curtain airbag. In this case, the curtain airbag quickly expands downward.

The guide airbag may be disposed between the side face of the vehicle and the folded curtain airbag in the upper area of the center pillar, and may be disposed along the side of the folded curtain airbag facing the cabin and/or along the side and the top of the folded curtain airbag in the upper area of the side door or the window.

When the guide airbag is disposed as above, the curtain airbag is pushed by the guide airbag inflated adjacent to the side face of the vehicle and moves toward the cabin in the upper area of the center pillar. Thus, the interference of the center pillar garnish can be prevented. In addition, in the upper area of the side door or the window, the curtain airbag is guided by the guide airbag inflated along the top or the side facing the cabin of the curtain airbag, and quickly expands downward.

Furthermore, when the guide airbag extends from between the folded curtain airbag and the side face of the vehicle to the lower portion of the folded curtain airbag in the upper area of the center pillar, the curtain airbag moves smoothly to the cabin, and the interference of the center pillar garnish can be reliably prevented.

Also in these cases, the curtain airbag is displaced toward the cabin over the upper end of the center pillar garnish facing the cabin in the upper area of the center pillar. Thus, the interference of the center pillar garnish with the curtain airbag can be reliably prevented, and the curtain airbag expands quickly along the side face of the vehicle.

According to the present invention, the volume of the guide airbag is smaller than that of the curtain airbag. Thus, the guide airbag finishes expanding faster than the curtain airbag.

According to the present invention, a common inflator preferably supplies gas to both the guide airbag and the curtain airbag. This leads to a reduction in various costs required for, for example, parts such as inflators and assembling, or a reduction in device weight.

Embodiments of the present invention will now be described with reference to the drawings.
Fig. 1 is a perspective view inside a vehicle including a curtain airbag device according to an embodiment.
Fig. 2 is a cross-sectional view taken along line II - II in Fig. 1;
Fig. 3 is a cross-sectional view taken along line III - III in Fig. 1;
Fig. 4 is a perspective view of a connection between airbags and an inflator;
Fig. 5 is a perspective view of the same part as that shown in Fig. 1 when the airbags are inflated;
Fig. 6 is a cross-sectional view taken along line VI - VI in Fig. 5;
Fig. 7 is a cross-sectional view taken along line VII - VII in Fig. 5;
Fig. 8 is a cross-sectional view illustrating another embodiment;
Fig. 9 is a cross-sectional view when airbags according to the embodiment shown in Fig. 8 are inflated; and
Fig. 10 is a perspective view inside a vehicle including a curtain airbag device according to yet another embodiment.
In the description below, the "front-back" corresponds to the front and the rear of the vehicle.

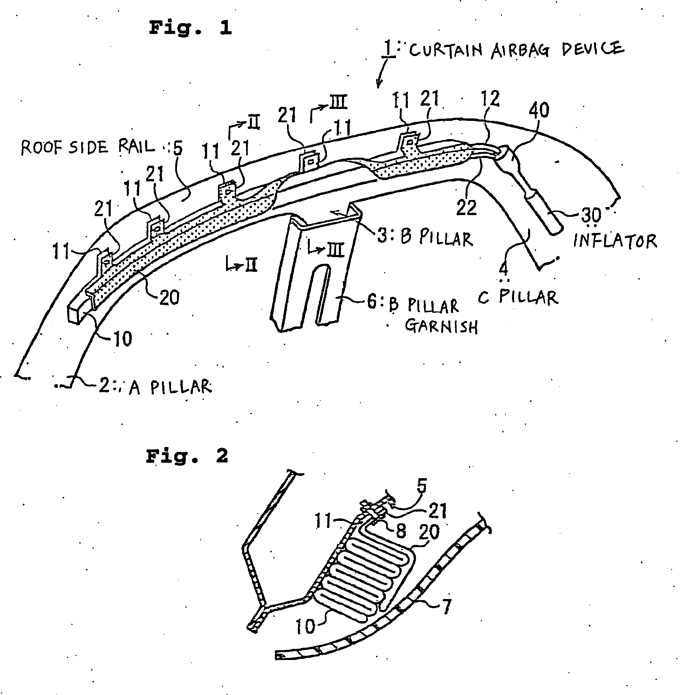

With reference to Fig. 1, the body of the vehicle including this curtain airbag device has an A pillar 2, a B pillar 3 serving as a center pillar, a C pillar 4, a roof side rail 5, and the like. A B pillar garnish 6 is attached to the B pillar 3. A roof lining 7 is provided along the roof of the vehicle body.

As shown in Figs. 1 to 3, the curtain airbag device includes a curtain airbag 10 folded in a slender manner, a guide airbag 20 disposed along the folded curtain airbag 10, an inflator 30 for inflating these airbags 10 and 20, and a gas-distributing unit 40.

The curtain airbag 10 extends from the upper portion of the A pillar 2 to that of the C pillar 4 via the roof side rail 5. A plurality of tabs 11 protrudes upward from the upper hem of the curtain airbag 10 with a predetermined spacing therebetween. These tabs 11 are fixed to the roof side rail 5 by fastenings 8 such as bolts and rivets. A gas inlet 12 extends from the rear portion of the curtain airbag 10, and is connected to a first gas outlet 41 of the gas-distributing unit 40. The size of the inflated curtain airbag 10 is large enough to cover substantially the entire window opening of a side door ranging from the vicinity of the A pillar 2 to the vicinity of the C pillar 4.

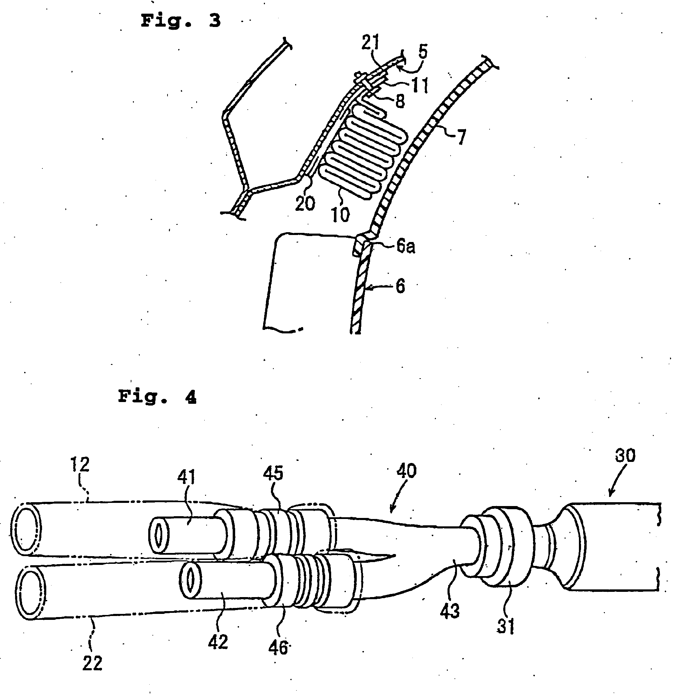

As shown in Fig. 3, the folded curtain airbag 10 is disposed above the B pillar garnish 6. When the folded curtain airbag 10 is projected downward, at least part of the folded curtain airbag 10 is disposed closer to the B pillar 3 than an end 6a of the B pillar garnish 6 facing the cabin.

The guide airbag 20 extends from the front end to the rear end of the curtain airbag 10. The guide airbag 20 expands only along the vicinity of the upper hem of the inflated curtain airbag 10, and the volume is smaller than that of the curtain airbag 10.

A plurality of tabs 21 protrudes from the upper hem of the guide airbag 20 with a predetermined spacing therebetween so as to overlap the tabs 11 of the curtain airbag 10. These tabs 21 are fixed to the roof side rail 5 by the fastenings 8 together with the tabs 11.

A gas inlet 22 extends rearward from the rear portion of the guide airbag 20, and is connected to a second gas outlet 42 of the gas-distributing unit 40.

The guide airbag 20 is folded so as to form a slender strip, disposed along the folded curtain airbag 10, and integrated with the folded curtain airbag 10 by binding tools such as tapes (not shown). The binding tools can easily be torn when the airbags 10 and 20 are inflated.

As shown in Fig. 2, the front and rear portions of the strip-shaped guide airbag 20 are disposed so as to cover the top and the side facing the cabin of the folded curtain airbag 10. As shown in Fig. 3, the portion of the folded guide airbag 20 substantially in the middle position in the front-back direction of the vehicle body is disposed between the folded curtain airbag 10 and the roof side rail 5. The middle position in the front-back direction of the vehicle body substantially corresponds to the upper area of the B pillar 3.

As shown in Figs. 2 and 3, the folded airbags 10 and 20 are covered with the roof lining 7.

The gas-distributing unit 40 includes the gas outlets 41 and 42 at the front, and a gas outlet 43 at the rear. The gas outlet 43 is connected to the inflator 30 via an adaptor 31. The gas inlet 12 of the curtain airbag 10 and the gas inlet 22 of the guide airbag 20 are fitted onto the gas outlets 41 and 42, respectively, and tied by bands 45 and 46. The gas-distributing unit 40 and the inflator 30 are fixed to the C pillar 4.

Operations of a curtain airbag device 1 having the above-described structure will now be described.

When a vehicle is involved in, for example, a side-on collision or rollover, the inflator 30 blows gas out so as to supply the gas to the airbags 10 and 20, and the airbags 10 and 20 start expanding. Since the guide airbag 20 is smaller than the curtain airbag 10, the guide airbag 20 finishes expanding faster than the curtain airbag 10, and changes the position or regulates the direction of the expanding curtain airbag 10. In the upper areas of the front door and the rear door, the guide airbag 20 is inflated between the curtain airbag 10 and the roof lining 7. As a result, the roof lining 7 is pushed open, and the curtain airbag 10 expands downward under the guidance of the guide airbag 20.

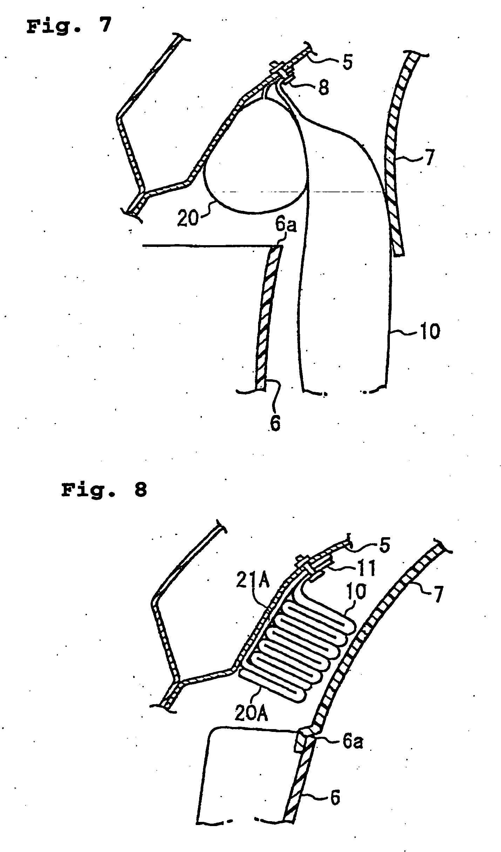

In the upper area of the B pillar 3, the guide airbag 20 expands between the curtain airbag 10 and the roof side rail 5 so as to push the roof lining 7 open and to displace the curtain airbag 10 toward the cabin over the upper area of the end 6a of the B pillar garnish 6 facing the cabin. As a result, as shown in Fig. 7, the curtain airbag 10 expands downward along the B pillar garnish 6 without the interference of the B pillar garnish 6. In this manner, the entire curtain airbag 10 expands downward smoothly.

In the upper area of the B pillar garnish 6, the guide airbag 20 may have a structure that expands both under the curtain airbag 10 and adjacent to the roof side rail 5.

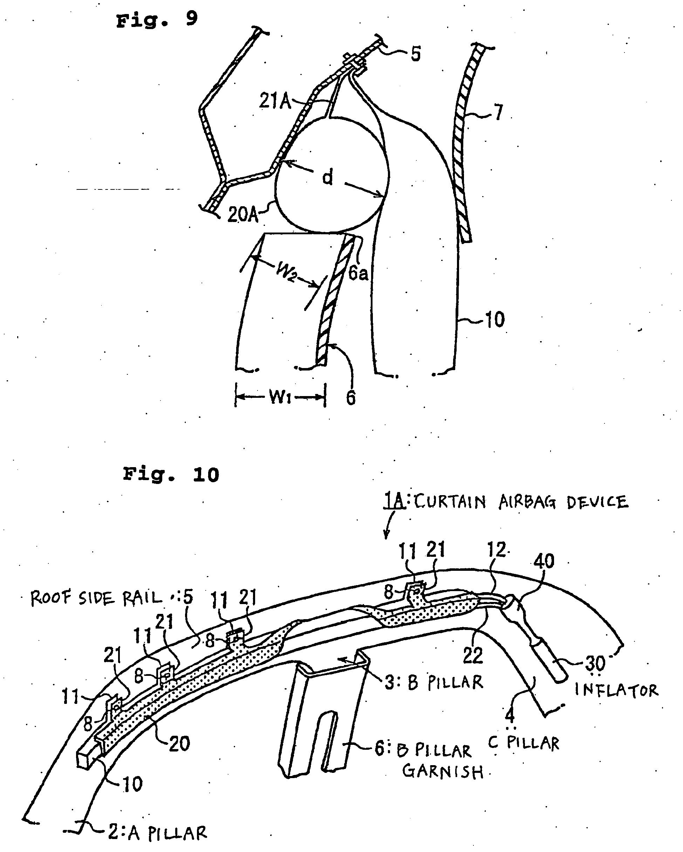

In this embodiment, the airbags 10 and 20 are inflated by a common inflator 30. This leads to a reduction in costs and weight.
Another embodiment will now be described with reference to Figs. 8 and 9.

In this embodiment, a guide airbag 20A is disposed only above the B pillar garnish 6. A tab 21A of this guide airbag 20A extends between the folded curtain airbag 10 and the roof side rail 5. A gas inlet of the guide airbag 20A extends long to the rear and is connected to the gas-distributing unit 40 (not shown in Figs. 8 and 9). Structures other than these components are the same as in the above-described embodiment.

Also in this embodiment, when the inflator starts operating, the guide airbag 20A finishes expanding faster than the curtain airbag 10. In the upper area of the B pillar garnish 6, the guide airbag 20A expands under the curtain airbag 10. Therefore, the curtain airbag 10 is pushed by the guide airbag 20A so as to move toward the cabin over the end 6a of the B pillar garnish 6 facing the cabin, and thus expands downward smoothly without the interference of the B pillar garnish 6.

In the embodiment shown in Figs. 8 and 9, the guide airbag 20A is disposed only above the B pillar garnish 6. However, the guide airbag may be disposed so as to cover the top and the side facing the cabin of the curtain airbag 10 in the upper areas of the front door and the rear door as shown in Fig. 1.

In the embodiment shown in Figs. 8 and 9, the guide airbag 20A expands under the curtain airbag 10. However, the guide airbag may expand adjacent to the roof side rail 5, or may expand both under the curtain airbag and adjacent to the roof side rail 5.

In the above-described embodiments, the curtain airbag 10 is displaced toward the cabin over the B pillar garnish 6 in the upper area of the B pillar garnish 6. To do so, the diameter d of the inflated guide airbag 20 or 20A above the B pillar garnish 6 is desirably larger than the width W₁ of the B pillar garnish 6 in the left-right direction of the vehicle body. When the diameter d is larger than a width W₂ defined by projecting the width W₁ in a direction perpendicular to the side surface of the roof side rail 5 facing the cabin, the interference between the curtain airbag 10 and the B pillar garnish 6 is reliably prevented.

A conventional jump base is not required in any of the above-described embodiments, and a common curtain airbag device can be attached to vehicles regardless of the sizes of the vehicle bodies or the sizes and the shapes of the B pillar garnishes.

Fig. 10 is a perspective view inside a vehicle including a curtain airbag device 1A according to yet another embodiment.

Also in this curtain airbag device 1A, the folded curtain airbag 10 extends from the upper portion of the A pillar 2 to that of the C pillar 4 along the roof side rail 5. In addition, the guide airbag 20 folded so as to form a strip extends from the front end to the rear end of the folded curtain airbag 10. Also in this embodiment, the plurality of tabs 11 and 21 protrudes from the upper hems of the curtain airbag 10 and the guide airbag 20, respectively, with a spacing therebetween in the front-back direction of the vehicle body. These tabs 11 and 21 are fixed together to the roof side rail 5 by the fastenings 8 such as bolts and rivets.

However, in this embodiment, the tabs 11 and 21 are not provided at the upper hems of the curtain airbag 10 and the guide airbag 20 substantially in the middle position in the front-back direction of the vehicle body. Thus, the curtain airbag 10 and the guide airbag 20 are not connected to the roof side rail 5 substantially in the middle position in the front-back direction of the vehicle body. The middle position in the front-back direction of the vehicle body substantially corresponds to the upper area of the B pillar 3.

Also in this embodiment, the front and rear portions of the guide airbag 20 are disposed so as to cover the top and the side facing the cabin of the folded curtain airbag 10, and the portion in the upper area of the B pillar 3 is disposed between the folded curtain airbag 10 and the roof side rail 5.

The guide airbag 20 may be disposed under the folded curtain airbag 10. Moreover, the guide airbag 20 may be disposed between the folded curtain airbag 10 and the roof side rail 5, and under the folded curtain airbag 10.

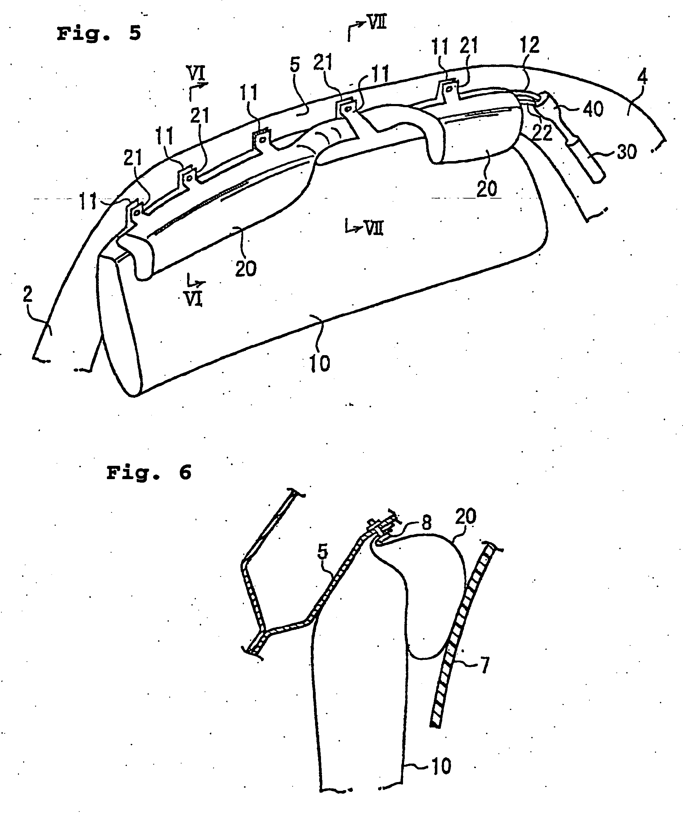

Structures other than the curtain airbag device 1A are the same as in the above-described curtain airbag device 1 shown in Figs. 1 to 7, and components having the same reference numerals or symbols correspond to the same components.

When the curtain airbag device 1A having the above-described structure is shipped from a manufacturing facility, the folded guide airbag 20 and the folded curtain airbag 10 are integrated together by binding tools such as tapes in advance.

To do so, first, the folded guide airbag 20 is disposed so as to cover the top and the side facing the cabin, when the device is attached to the vehicle body, of the folded curtain airbag 10 over the entire length, and the front ends and the rear ends of both airbags are integrated together by binding tools such as tapes. Next, the middle portion of the guide airbag 20 is twisted so as to be disposed along a side adjacent to the roof side rail, when the device is attached to the vehicle body, of the folded curtain airbag 10, and the middle portions of both airbags are integrated together by the binding tools such as tapes.

When the integrated structure of the folded guide airbag 20 and the folded curtain airbag 10 is attached to the vehicle body, the integrated structure is disposed along the roof side rail 5, and the front and rear ends thereof are fixed to the roof side rail 5 by the fastenings 8 via the tabs 11 and 21.

In this manner, according to this embodiment, the curtain airbag 10 and the guide airbag 20 can be easily attached to the roof side rail 5 only by fixing the front ends and the rear ends of both airbags.

According to this curtain airbag device 1A, the middle portions of the curtain airbag 10 and the guide airbag 20 in the front-back direction of the vehicle body are not connected to the roof side rail 5. Therefore, the middle portion of the guide airbag 20 in the front-back direction of the vehicle body may be tucked between the folded curtain airbag 10 and the roof side rail 5 after fixing the front ends and the rear ends of the curtain airbag 10 and the guide airbag 20.

According to the curtain airbag device 1A, the curtain airbag 10 is not connected to the roof side rail 5 in the upper area of the B pillar 3. Accordingly, when the guide airbag 20 is inflated between the curtain airbag 10 and the roof side rail 5, the curtain airbag 10 is pushed by the guide airbag 20 and moves smoothly and quickly toward the cabin. As a result, the interference of the B pillar garnish 6 with the curtain airbag 10 is reliably prevented.

The above-described embodiments are merely examples for carrying out the present invention, and embodiments other than those shown in the drawings are permissible within the scope of the present invention. For example, the curtain airbag and the guide airbag may be inflated by separate inflators. Moreover, the inflator may be disposed at a predetermined position of the roof side rail or on the A pillar.

In the present invention, a center pillar refers to a pillar disposed between a front pillar at the forefront in the front-back direction of the vehicle body and a rear pillar at the rearmost position. In the above-described embodiments, the vehicle body includes three pillars, the A pillar, the B pillar, and the C pillar, from the front to the rear, and only the B pillar corresponds to the center pillar. When a vehicle body includes four pillars, an A pillar, a B pillar, a C pillar, and a D pillar, the B pillar and the C pillar correspond to the center pillars.

## Claims

1. A curtain airbag device, comprising:
a folded curtain airbag (10) arranged to be disposed along an upper side face of a vehicle facing a cabin and being capable of expanding downward along the side face;
an inflator (30) for inflating the curtain airbag (10); and
a guide airbag (20; 20A) for displacing the curtain airbag (10) toward the cabin and/or for regulating the expanding direction of the curtain airbag (10), the guide airbag (20; 20A) expanding substantially at the same time as the expansion of the curtain airbag (10),
wherein
the guide airbag (20; 20A) is arranged to be disposed between the side face of the vehicle and the folded curtain airbag (10) in the upper area of a center pillar (3); and
the guide airbag (20; 20A) is arranged to be disposed along a side of the folded curtain airbag (10) facing the cabin and/or along the side and the top of the folded curtain airbag (10) in the upper area of a side door or a window.

2. The curtain airbag device according to Claim 1, wherein
the guide airbag (20; 20A) is disposed under the folded curtain airbag.

3. The curtain airbag device according to Claim 1 or 2, wherein
the guide airbag (20; 20A) expands so as to displace the curtain airbag (10) toward the cabin over the upper end of a center pillar garnish (6) facing the cabin.

4. The curtain airbag device according to any one of Claims 1 to 3, wherein
the guide airbag (20; 20A) expands so as to displace the curtain airbag (10) toward the cabin over the upper end of a center pillar garnish (6) facing the cabin in the upper area of the center pillar (3).

5. The curtain airbag device according to anyone of Claims 1 to 4, wherein
the volume of the guide airbag (20; 20A) is smaller than that of the curtain airbag (10).

6. The curtain airbag device according to any one of Claims 1 to 5, wherein
the inflator (30) is connected to both the guide airbag (20; 20A) and the curtain airbag (10) so as to supply gas to both airbags.

7. A vehicle comprising:
the curtain airbag device (1; 1A) according to any one of Claims 1 to 6.

## Patentansprüche

1. Vorhang-Airbagvorrichtung mit
einem gefalteten Vorhang-Airbag (10), der so angeordnet ist, dass er sich entlang einer Oberseite eines Fahrzeugs zur Fahrzeugkabine weisend erstreckt und sich nach unten entlang der Seitenfläche ausdehnen kann,
einer Aufblasvorrichtung (30) zum Aufblasen des Vorhang-Airbags (10), und
einem Führungsairbag (20; 20A) zum Verschieben des Vorhang-Airbags (10) zur Fahrzeugkabine und/oder zum Einstellen der Expansionsrichtung des Vorhang-Airbags (10), wobei sich der Führungsairbag (20; 20A) im wesentlichen zur gleichen Zeit wie der Vorhang-Airbag (10) ausdehnt,
wobei der Führungsairbag (20; 20A) zwischen der Seitenfläche des Fahrzeugs und dem gefalteten Vorhang-Airbag (10) im oberen Bereich einer Mittelsäule (3) vorgesehen werden kann, und
der Führungsairbag (20; 20A) entlang einer der Fahrzeugkabine zugewandten Seite des gefalteten Vorhang-Airbags (10) und/oder entlang der Seite und dem Oberteil des gefalteten Vorhang-Airbags (10) im oberen Bereich einer seitlichen Tür oder eines Fensters vorgesehen werden kann.

2. Vorhang-Airbagvorrichtung nach Anspruch 1, wobei
der Führungsairbag (20, 20A) unter dem gefalteten Vorhang-Airbag vorgesehen ist.

3. Vorhang-Airbagvorrichtung nach Anspruch 1 oder 2, wobei
der Führungsairbag (20; 20A) sich ausdehnt und so den Vorhang-Airbag (10) in Richtung der Fahrzeugkabine über das obere Ende einer der Fahrzeugkabine zugewandten Mittelsäulenhalterung (6) verschiebt.

4. Vorhang-Airbagvorrichtung nach einem der Ansprüche 1 bis 3, wobei
der Führungsairbag (20; 20A) sich so ausdehnt, dass er den Vorhang-Airbag (10) in Richtung der Fahrzeugkabine über das obere Ende einer im oberen Bereich der Mittelsäule (3) der Fahrzeugkabine zugewandten Mittelsäulenhalterung (6) verschiebt.

5. Vorhang-Airbagvorrichtung nach einem der Ansprüche 1 bis 4, wobei
das Volumen des Führungsairbags (20; 20A) kleiner als das des Vorhang-Airbags (10) ist.

6. Vorhang-Airbagvorrichtung nach einem der Ansprüche 1 bis 5, wobei
die Aufblasvorrichtung (30) sowohl mit dem Führungsairbag (20; 20A) als auch mit dem Vorhang-Airbag (10) verbunden ist, um beiden Airbags Gas zuzuführen.

7. Fahrzeug mit
der Vorhang-Airbagvorrichtung (1; 1A) nach einem der Ansprüche 1 bis 6.

## Revendications

1. Dispositif de coussin gonflable de type rideau, comprenant:
un coussin gonflable de type rideau plié (10) arrangé d'être disposé le long d'une face latérale supérieure d'un véhicule en face d'une cabine pouvant s'étendre vers le bas le long de la face latérale ;
un dispositif de gonflage (30) pour gonfler le coussin gonflable de type rideau (10) ; et
un coussin gonflable de guidage (20 ; 20A) pour déplacer le coussin gonflable de type rideau (10) vers la cabine et/ou pour régler la direction d'expansion du coussin gonflable
de type rideau (10), le coussin gonflable de guidage (20 ; 20A) s'étendant sensiblement en même temps que l'expansion du coussin gonflable de type rideau (10), dans lequel le coussin gonflable de guidage (20 ; 20A) est arrangé d'être disposé entre la face latérale du véhicule et le coussin gonflable de type rideau plié (10) dans la zone supérieure d'un pilier central (3) ; et
le coussin gonflable de guidage (20 ; 20A) est arrangé d'être disposé le long un côté du coussin gonflable de type rideau plié (10) en face de la cabine et/ou le long le côté et la partie supérieure du coussin gonflable de type rideau plié (10) dans la zone supérieure d'une portière latérale ou d'une fenêtre.

2. Dispositif de coussin gonflable de type rideau selon la revendication 1, dans lequel le coussin gonflable de guidage (20 ; 20A) est disposé sous le coussin gonflable de type rideau plié.

3. Dispositif de coussin gonflable de type rideau selon la revendication 1 ou 2, dans lequel le coussin gonflable de guidage (20 ; 20A) s'étend de manière à déplacer le coussin gonflable de type rideau (10) vers la cabine au-dessus d'une extrémité supérieure d'un crochet du pilier central (6) en face de la cabine.

4. Dispositif de coussin gonflable de type rideau selon l'une quelconque des revendications 1 à 3, dans lequel
le coussin gonflable de guidage (20 ; 20A) s'étend de manière à déplacer le coussin gonflable de type rideau (10) vers la cabine au-dessus d'une extrémité supérieure d'un crochet du pilier central (6) en face de la cabine dans la zone supérieure du pilier central (3).

5. Dispositif de coussin gonflable de type rideau selon l'une quelconque des revendications 1 à 4, dans lequel
le volume du coussin gonflable de guidage (20 ; 20A) est moins grand que celui du coussin gonflable de type rideau (10).

6. Dispositif de coussin gonflable de type rideau selon l'une quelconque des revendications 1 à 5, dans lequel
le dispositif de gonflage (30) est lié au coussin gonflable de guidage (20 ; 20A) ainsi qu'au coussin gonflable de type rideau (10) de manière à alimenter les deux coussins gonflables avec du gaz.

7. Véhicule comprenant :
le dispositif de coussin gonflable de type rideau (1 ; 1A) selon l'une quelconque des revendications 1 à 6.
